# EUROPEAN PATENT SPECIFICATION

(11) **EP 2 834 302 B1**
(45) Date of publication and mention of the grant of the patent: **14.09.2016**
(21) Application number: 13722045.5
(22) Date of filing: 29.03.2013
(51) Int. Cl.: C08L 23/10, C08L 23/12, C08L 23/14

(54) **THERMOPLASTIC POLYMER FORMULATION CONTAINING POLYAMIDES/EVOH AND POLYOLEFINS, USE AND PRODUCTS THEREOF**
THERMOPLASTISCHE POLYMERFORMULIERUNG MIT POLYAMIDEN/EVOH UND POLYOLEFINEN, VERWENDUNG UND PRODUKTE DARAUS
FORMULATION DE POLYMÈRE THERMOPLASTIQUE CONTENANT DES POLYAMIDES/EVOH ET DES POLYOLÉFINES, LEUR UTILISATION ET PRODUITS À BASE DE CETTE FORMULATION

(30) Priority: 03.04.2012 WO PCT/IB2012/000676
(43) Date of publication of application: 11.02.2015
(73) Proprietor: IGAP S.p.A., 46019 Viadana (MN) (IT)
(72) Inventor: DINUNZIO, Giuseppe, 46019 Viadana (MN) (IT)
(74) Representative: Gislon, Gabriele
(86) International application number: PCT/IB2013/000570
(87) International publication number: WO 2013/150357

(56) References cited:
- EP-A2- 0 622 183
- JP-A- 9 310 259

## Description

### Background of the invention.

The present invention relates to a thermoplastic polymer formulation containing polyamides/EVOH and polyolefins, the use and the products of this formulation.

In particular, the invention relates to a thermoplastic polymer formulation that contains polyamides (PA) and/or EVOH (ethylene vinyl alcohol) in combination with polyolefins which comprise at least one polypropylene. More in particular, the present invention relates to a thermoplastic formulation where the PA and/or EVOH component derives from production waste of multilayer barrier films, that are in general for use with food products.

### Description of prior art.

The industrial waste above described is obtained, at the step immediately after coupling the layers of single films produced with the different polymers used (usually PA, PE, PP, EVOH) to obtain the multilayer barrier film (from two or more layers), i.e. during the cutting step of the multilayer film to reduce the production width thereof to the commercial widths required for the different uses possible. The cutting step generates scraps and waste which are collected for re-use; however, after lamination it is no longer possible to separate the different components of the film to re-obtain PA, polyethylene (PE), polypropylene (PP) EVOH re-usable individually, and the waste must be used as is.

In general this industrial waste is subjected to a "densification" process followed by "pelletization" or "granulation" and is then resold.

The waste has some negative characteristics, which limit re-use thereof as a thermoplastic material:
a) the presence in the material, e.g. the single pellets or granules, of different polymers with poor compatibility (in particular, but not only, when PAs are present);
b) the variability of the chemical formulations that these industrial wastes can have within the same batch of material, i.e. the type and the quantity of polymers in the material can vary according to the origin of the material and its intended use as a film;
c) the variability of the amount of the same chemical components, in the single pellets or in the single granules;
d) the particular "softness" of this industrial waste;
e) the fact that when mixed and molded with normal polyolefins the wastes give the final product an aesthetically unacceptable surface and also unacceptable physical characteristics (fragility, faster aging, and the like).

Due to the above discussed problems, the said waste materials have essentially been used as fuel to feed energy cogeneration processes. The use of these waste materials as additives in thermoplastic formulations is also known, but only in the maximum amount of 7.00% by weight in polymer blends used to produce slabs or plates by extrusion and in the maximum amount of 5.00% by weight for the composition of polymer blends to be used for injection molding of products such as fruit transport containers or boxes and similar products with low aesthetic and technical requirements.

If the maximum thresholds of 7.00% and of 5.00% are exceeded, this causes loss of the minimum technical requirements for the product obtained by the thermoplastic blend; for example, in the case of fruit boxes, there is insufficient strength of the bottom and of the sides of the box, the break under the load.

JP 09310259 discloses a thermoplastic formulation for making fibers comprising PP homopolymer with MFR2 of 30 g/10 min, HPDE and 40% EVOH; the fibers made with the above materials, coinjected side-by-side as shown in the figures, are easily splitted when the fiber is treated e.g. by high pressure water jets so as to provide finer fibers.

The applicant carried out molding tests with the aforesaid materials in the presence of compatibilizing agents of the polymers present in the formulation; these agents are generally based on non-polar polyolefins or acrylic polymers and are known for their use in the production of multilayer films, in particular in the presence of several layers of film laminated to one another. These tests also gave negative results, both with compatibilizers already present in the material and with compatibilizers added to the blend to be molded.

The object of the present invention is to solve the aforesaid problems and to provide a formulation, i.e. a mixture or blend containing PA and/or EVOH and polyolefins, in particular the waste materials discussed above, obtained from multilayer films containing PA and/or EVOH and polyolefins, where said reclaimed materials are present in quantities greater than 7%, which can be used for molding products capable of satisfying normal aesthetic and technical requirements. In the formulation of the invention the polymers are blended together and cannot be mechanically separated as is in above mentioned JP 09310259.

Another object of the present invention is to obtain a formulation or mixture or blend suitable for molding, in particular injection molding, at more competitive costs with respect to those that can be obtained with the use of polypropylene filled with low cost CaCO₃ mineral filler.

A further object of the invention is to obtain formulations suitable for producing tables, chairs and furniture items, provided with the required aesthetic surface qualities and capable of complying with the relative UNI-EN European technical standards necessary for certification of the products for domestic or community use.

### Summary of the invention

These objects are achieved with the present invention, which relates to a polymer blend according to claim 1.

In particular, this blend advantageously uses industrial waste containing two or more of PE, PA, PP, EVOH; more in particular, the waste is selected from those based on PE + PA, PP + PA, PP+PE+PA, and PP EVOH and PP PA EVOH. The amount of recycling waste material in the formulation of the invention is preferably within the range of 10 to 70% by weight of the total weight of the formulation. An exemplary recycling material contains PP+PA and/or PE+PA and/or PP+PE+PA.

The PAs can be filled with glass fiber, additionally compatibilizers between the various polymers can also be present. These compatibilizers can be present in the waste as they are used in the lamination process of the films and/or can be added during the preparation step of the formulation to aid the action of the low viscosity PP homopolymer in the formulation.

The PP homopolymer has the function of "adhesive" between the various polymer components of the formulation and, for this purpose, the PP homopolymer has MFI within the range between 15 and 50 (g/10 min) measured according to ASTM 1238L, preferably 20 to 50 (g/10 min) and most preferably has MFI = 30-35, 35 being preferred. The quantity of PP homopolymer with described MFI to be used is the quantity sufficient to compatibilize the various components of the blend and obtain a formulation that can be injected or extruded and capable of giving a product having the required surface and mechanical characteristics. In general, the quantity of PP homopolymer with compatibilizing function is at least 15% by weight, preferably in the range of 15% to 50% or 20% to 50% by weight of the final weight of the formulation, preferably between 25% and 40% by weight and most preferably between 30% and 35%.

According to an embodiment of the invention, the elastic modulus of the PP homopolymer to be used is between 1200 N/cm² and 1600 N/cm². In case technical and functional performances of the finished products need to be increased, or the weight of the product has to be reduced, keeping the same technical and functional performances, preferably it has a value of at least 1700 N/cm², most preferably in the range of 1700 to 2300 N/cm²; a preferred value is 2100 N/cm².

The amount of PAs is in general within the range of 1 to 20% by weight, preferably 1 to 15%.

In some types of waste materials the PAs are absent and are replaced by EVOH, which is present in the final formulation of the invention in a quantity between 0.05% and 2.0% by weight, preferably between 0.06% and 0.67% by weight. PA are preferred to EVOH as additional polymers in the composition.

The polyolefins present in the formulation, besides the PP homopolymer with "compatibilizing" function described above, are preferably selected from PE and PP, both homo- and copolymers. In particular, use of PP homo- or copolymers filled with mineral fillers, such as CaCO₃ or talc is preferred, generally having MFI suitable for the type of molding required, for example injection molding. Suitable MFIs are, for example, between 8 and 12.

As previously discussed, the formulation comprises a PP (co)polymer different from the above mentioned homopolymer with MFI in the range 15 to 50. The amount of PP (co)polymer in the formulation according to the invention is preferably between 15% and 40%, preferably 20 to 40%, by weight of the final weight of the formulation, most preferably between 20% and 35%. As mentioned, the PP (co)polymer, i.e. homo- or copolymer, is in general filled with a mineral filler, preferably calcium carbonate or talc; the quantity of filler in the PP is preferably between 15% and 45% by weight, depending on the final characteristics required for the molded part obtained from the formulation of the invention and on the presence of any other fillers in the waste materials used and as a function of the quantity of PA in said waste materials. The total amount of mineral filler, on the total weight of the formulation of the invention, is therefore between 3% and 18% by weight of the total weight of the formulation, preferably 10 to 16%, most preferably between 10% and 15% by weight.

It is also possible to use other fillers, besides CaCO₃ and talc, in particular it is possible to use wood in the form of particles suitable for extrusion or injection molding processes; in the case of wood fillers, the quantity of filler can reach up to 18% by weight of wood on the total formulation weight. In the event of a wood filler being used, the quantity of waste materials used for the formulation decreases in a substantially corresponding manner; in other words, if, for example, 10.00% by weight of wood is added, the quantity of PA/EVOH plus polymers waste decreases, for example, from 33% to 23%. Moreover, according to the specific characteristics of the article to be molded it is possible to reduce the percentage of PP filled with calcium carbonate, to the advantage of an equivalent increase of the percentage of PP homopolymer with MFI 15-50, and possibly even to totally eliminate the PP filled with mineral filler. This is because both the organic wood filler and the mineral filler compete in stiffening the structure; the stiffness or rigidity must be graduated as a function of the specific article to be produced, to avoid unwanted excesses.

Preferably, if wood filler is present, wood, PP homopolymer with MFI 15-50 (or 20-50) and PP filled with calcium carbonate are granulated before the granules thus obtained are mixed with the industrial waste of the invention.

The PE present in the formulation is in general the one contained in the industrial waste to be recycled and may also not be present. The total quantity of PE, including the low density PE and the PE present as additive or compatibilizer in the waste material of multilayer films, can reach up to 35-40% by weight of the total weight of the polymer formulation.

Summarizing, a typical formulation will contain (by weight on the total weight of the formulation): 15-50% of PP homopolymer with MFI in the range of 15 to 50 (g/10 min) measured according to ASTM 1238L; 15-40% of PP (co)polymer, including at least a filler; 10-70% of a waste material comprising polyolefins, PA and/or EVOH. In an exemplary embodiment, the elastic modulus of the PP homopolymer is between 1200 and 1600 N/cm²,; as said, if technical and functional performances of the products need to be increased, or, if the weight of the products need to be decreased, keeping the same technical and functional performances, preferably it has a value of at least 1700 N/cm², most preferably in the range of 1700 to 2300 N/cm²; a preferred value is 2100 N/cm².

It was in fact surprisingly found that the final mechanical properties of a product obtained by a formulation of the invention where the PP homopolymer has the above discussed MFI and high elastic modulus, are equivalent to the corresponding properties (e.g. impact resistance) of products obtained without using waste materials and adopting virgin PP with the same high elastic modulus. This results in the advantage that a product can be made with less material and still satisfy the requirements for the said object. As an example, the amount of material necessary to produce a typical garden chair (that can satisfy the strict safety requirements for chairs) can be reduced from 2.5 kg to 2.0 kg.

The invention also relates to products molded with the formulation discussed above, according to claim 12.

A further object of the invention is a process for recycling waste materials from the production of multilayer films, according to claim 16.

Yet another object of the invention is the use of a polypropylene homopolymer with a flow grade (MFI) in the range between 15 and 50 (or 20-50) as compatibilizer between the waste materials of the production of laminated films and further polymer materials and also as compatibilizers between PA, EVOH, PP, PE in the production of said films, as described in claim 18.

The invention has numerous advantages with respect to the prior art.

Firstly, it allows the use of the cited waste thermoplastic materials as components of a thermoplastic formulation in quantities exceeding 10%, preferably exceeding 20% by weight and in a quantity that reaches approximately 35% by weight of the final formulation, with respect to the prior art which stops at 5% for formulations to be used in injection molding.

This brings a considerable advantage from an environmental viewpoint.

Moreover, the invention enables a dramatic reduction in the production costs of the molded products obtained with the formulation of the invention, all structural and aesthetic characteristics being equal.

A further advantage is the possibility of incorporating a wood based filler in the formulation, for example wood flour or chips for molding, up to an amount of 18% by weight of the total weight without the wood-based filler causing the problems present in the prior art which makes use of conventional formulations.

### Description of examples of embodiments.

These and other advantages will be discussed further below with reference to embodiments provided by way of non-limiting examples.

### Example 1 - Industrial re-use in a blend of industrial waste of PE PA type.

The tested PE PA waste in granule form has a minimum percentage of 3.00% and maximum percentage of 45.00% of PAs by weight. The PAs present are mainly amorphous, but can also be crystalline, or can also be present in both forms. The PAs can also be present in the form of PAs filled with glass fibers. The tests carried out gave positive results with a glass fiber filler content between 0.00% and 3.00% of the total composition of the industrial waste of PE PA type. To simplify, the percentage of the glass fiber filler will be included in the percentage of composition referred to the PAs percentage. Therefore, the industrial waste of PE PA granule type used for the tests was characterized by a minimum percentage of 3.00% and maximum percentage of 45.00% of PA, therefore by a minimum percentage of 55.00% and maximum percentage of 97.00% of PE.

The percentage of PE includes the presence of PE in any form, including low density PE, or the compatibilizers and/or impact modifiers for PA, based on PE.

Optimal results were obtained with the production by mixing and drying/dehumidifying, at the temperature of 80°, in conventional mixing and drying silos, of a molding blend in granule form with the following composition (the percentage composition indicated is always by weight, as are all the percentage values provided above and those that will be provided hereafter in the present description):
- 33.33 % (1 part) of industrial waste in granules of PE PA type (with the composition limits stated above);
- 33.33% (1 part) polypropylene homopolymer in granules with MFI 35 (g/10 min, ASTM 1238L.
- 33.33% (1 part) polypropylene filled to 40.00% with CaCO₃ mineral filler, in granules;

This gives a polymer blend used for the injection molding process with a content of:
1,00% < PA < 15.00% (which can have max. 1.00% of glass fiber filler);
18.33% < PE < 32.33%, including low density PE and compatibilizers and/or impact modifiers for PA, based on PE;
   - 33.33% polypropylene homopolymer with MFI 35;
   - 20.01% polypropylene homopolymer or copolymer deriving from polypropylene filled to 40.00% with CaCO₃ mineral filler in granule form;
   - 13.32% CaCO₃ mineral filler.

The same excellent results were obtained with polypropylene filled to 40.00% with talc, again in granule form.

The three-part mixing method, together with the previous drying/dehumidifying step at 80°, proved to be effective in reaching the following necessary technical objects:
- on the one hand 33.33% of homopolymer with a MFI grade of 35 provides the blend with the compatibilizer/adhesive effect necessary to overcome and neutralize the high incompatibilities, with respect to the injection process of combined PE, PA and PP; at the same time it makes it possible to overcome, in part, the tenderness and rubbery nature of the PE PA industrial waste tested, in the wide variability, subject to the sole limits set forth above, of these same PE PA waste materials;
- it provides a compatibilizer base sufficient for the presence, together with the industrial waste of PE PA type, of a substantial quantity (33.33%) of PP filled to 40.00% with low cost mineral filler, which contributes for the remaining part to the final stiffening of the structure of the article obtained.

In this example, and also in all the following examples, good results were obtained also lowering the grade of polypropylene homopolymer used from a grade of 35 to 20 or, vice versa, increasing it to a grade of 40.

Moreover, results ranging from good to sufficient were obtained by limiting, in the blend, the percentage of polypropylene homopolymer with a grade from 20 to 40 from the optimal percentage of 33.33% to the minimum percentage of 25.00%, with a corresponding and balanced increase, on the one hand of the percentage of PE PA industrial waste present and on the other of the polypropylene filled with low cost mineral filler.

Finally, good results were obtained also be reducing the percentage of CaCO₃ mineral charge from 40.00% to a minimum of 25.00% in the filled polypropylene in granule form. The presence of polypropylene homopolymer with a grade from 20 to 40 in amounts above 33.33% produces optimal results, but is not economically significant as it gives a rapidly increasing cost per kg of the blend used.

As stated, the same general method illustrated above proved effective also in the research and in the tests carried out on industrial waste of the type PP PA, PP PE PA and of the type PP EVOH and PP PA EVOH.

### Example 2 - Industrial re-use in a blend of industrial waste of PP PA type.

The same process as example 1 is used.

The tested PP PA waste in granule form has a maximum percentage of 2.00% of glass fiber in the PAs. The industrial waste of PP PA type in granules, used for the tests, is characterized by a minimum percentage of 5.00%, and maximum percentage of 30.00% of PA, therefore by a minimum percentage of 70.00% and maximum percentage of 95.00% of PP.

The percentage of PP includes the presence of PP in any form, including oriented PP, which typically can form the outermost layer of the original multilayer barrier film and adhesives based on PP, just as the percentage of PAs includes any presence of glass fiber filler.

Mixing and drying/dehumidifying was carried out, at the temperature of 80°, in conventional mixing and drying silos, of a molding blend in granule form with the following composition by weight:
- 33.33 % industrial waste in granule form of PP PA type (as defined above);
- 33.33% polypropylene homopolymer in granule form with a grade of 35 (MFI =35);
- 33.33% polypropylene filled to 40.00% with CaCO₃ mineral filler, in granule form; This gives a polymer blend used for the injection molding process with a content of:
   1.67% < PA < 10.00% in the different forms described above (bearing in mind that of the max. 10.00%, it is possible to have max. 9.33% of true PAs and max. 0.67% of glass fiber filler);
   23.33% < PP < 31.66%, including the oriented PP and the adhesives and/or impact modifiers for PA, based on PP;
- 33.33% polypropylene homopolymer with MFI= 35;
- 20.01% polypropylene homopolymer or copolymer deriving from polypropylene filled to 40.00% with CaCO₃ mineral filler in granule form;
- 13.32% CaCO₃ mineral filler.

### Example 3 - Industrial re-use in a blend of industrial waste of PP EVHO and PP PA EVOH type.

As third step, the general method discussed above was tested on industrial waste of PP EVOH type and of PP PA EVOH type. The multilayer films of PP EVOH type and of PP PA EVOH type are used when the gaseous exchange must be totally inhibited and not merely regulated. For this purpose, a thin layer produced with EVOH (also called EVA) is placed in the multilayer film. EVOH totally substitutes the PAs or is used in partial substitution of the PAs.

The PP EVOH and PP PA EVOH waste in granules tested is characterized by a minimum percentage of 0.00% (if PP EVOH) and maximum percentage of 29.80% of PA (if PP PA EVOH). The PAs present are mainly amorphous, but can also be crystalline or can also be present in both forms. The PAs can also be present in the form of PAs filled with glass fibers, up to 1.99% of the total composition of the industrial waste of PP PA EVOH type. The percentage of glass fiber filler will be included in the percentage of composition referred to the PAs. Therefore, the industrial waste of PP EVOH and PP PA EVOH type in granules used for the tests is characterized by a minimum percentage of 0.00% (if PP EVOH) and maximum percentage of 29.80% of PA (if PP PA EVOH). It is also characterized by a minimum percentage of 0.20% and maximum percentage of 2% of EVOH, both if it is industrial waste of PP+EVOH type, and if it is industrial waste of PP+PA+EVOH type. Finally, it has a minimum percentage of 68.20% and maximum percentage of 99.80% of PP (if PP + EVOH).

The percentage of PP includes the presence of PP in any form, including oriented PP, which typically can form the outermost layer of the original multilayer barrier film, and adhesives and/or impact modifiers for PA, based on PP (impact modifiers for PA based on PP can only be present in industrial waste of PP PA EVOH type), just as the percentage of PAs includes any presence of glass fiber filler.

Optimal results were obtained by mixing and drying/dehumidifying, at the temperature of 80°, in conventional mixing and drying silos, a molding blend in granule form with the following composition by weight:
- 33.33% industrial waste in granule form of PP EVOH or PP PA EVOH type (with the composition limits set forth above);
- 33.33% polypropylene homopolymer in granule form with a grade of 35;
- 33.33% polypropylene filled to 40.00% with CaCO₃ mineral filler, in granule form; This gives a polymer blend used for the injection molding process with a content of:
- 0.00% (if PP EVOH) < PA < 9.93% (if PP PA EVOH) in the different forms described above (with max. 0.66% of glass fiber filler);
- 0.067% < EVOH < 0.67% (both in PP EVOH and in PP PA EVOH);
- 22.73% < PP < 33.26%, including the oriented PP and the adhesives based on PP and/or the impact modifiers for PA, based on PP (this only in the case of PP PA EVOH);
- 33.33% polypropylene homopolymer with MFI= 35;
- 20.01% polypropylene homopolymer or copolymer deriving from polypropylene filled to 40.00% with CaCO₃ mineral filler in granule form;
- 13.32% CaCO₃ mineral filler.

### Example 4 - Industrial re-use in a blend of industrial waste of PP PE PA type.

The method as above was tested on waste of PP PE PA type.

The tested PP PE PA waste in granules form has a minimum percentage of 20.00% and maximum percentage of 40.00% of PA, a minimum percentage of 20.00% and maximum percentage of 40.00% of PE and a minimum percentage of 20.00% and maximum percentage of 60.00% of PP. The PAs present mainly amorphous, but can also be crystalline or can also be present in both forms. The PAs can also be present in the form of PAs filled with glass fibers up to 2.67% of the total composition of the industrial waste of PP PE PA type. For simplicity, the percentage of the glass fiber filler will be included in the percentage of composition counted in the PAs. Therefore, the industrial waste of PP PE PA type in granules used for the tests is characterized by a minimum percentage of 20.00% and maximum percentage of 40.00% of PA. It is also characterized by a minimum percentage of 20.00% and maximum percentage of 40.00% of PE, possibly present also as low density PE, adhesives based on PE and/or impact modifiers for PA, based on PE. Finally, it includes a minimum percentage of 20.00% and maximum percentage of 60.00% of PP.

The percentage of PP includes the presence of PP in any form, including oriented PP, which typically can form the outermost layer of the original multilayer barrier film of compatibilizers based on PP and/or of impact modifiers for PA, based on PP, just as the percentage of PAs also includes any presence of the glass fiber filler, and the percentage of PE also includes the presence of low density PE, of compatibilizers based on PE, and/or of impact modifiers for PA, based on PE.

Optimal results were obtained by mixing and drying/dehumidifying, at the temperature of 80°, in conventional mixing and drying silos, a molding blend of granules with the following composition by weight of the weight of the final formulation:
- 33.33 % industrial waste in granules of PP PE PA type (with the composition limits set forth above);
- 33.33% polypropylene homopolymer in granules with a grade of 35;
- 33.33% polypropylene filled to 40.00% with CaCO₃ mineral filler in granules;
This gives a polymer blend used for the injection molding process with a content of:
- 6.67% < PA < 13.33% in the different forms described above (with max. 12.24%, of true PA and max. 0.89% of glass fiber filler);
- 6.67% < PE < 13.33% (including the low density PE, the adhesives and/or the impact modifiers for PA, both based on PE);
- 6.67% < PP < 20.00%, including the oriented PP, the adhesives based on PP and/or the impact modifiers for PA, based on PP;
- 33.33% polypropylene homopolymer with a grade of 35;
- 20.01% polypropylene homopolymer, or copolymer deriving from polypropylene filled to 40.00% with CaCO₃ mineral filler in granule form;
- 13.32% CaCO₃ mineral filler.

### Example 5 - Industrial re-use in "high" blends of the industrial waste of PE PA, PP PA, PP EVOH, PP PA EVOH and PP PE PA type containing adhesives based on PE, of PP, and/or impact modifiers for PA based on PE and/or PP, in quantities exceeding 5.00%.

Industrial waste of the type indicated above was tested, in which PE and/or PP, in their entirety, are present for at least 5.00% by weight of the same waste in the form of compatibilizers based on PP and PE and/or of impact modifiers for PA, based on PP and PE.

In the case of these quantities of "adhesives" (i.e. compatibilizers) the percentage of the PE PA, PP PA, PP EVOH, PP PA EVOH or PP PE PA industrial waste can increase from 33.33% to 48.00% of the blend produced, reducing in a balanced manner the quantity of PP homopolymer of high grade (between grade 20 and grade 40), and that of PP filled with CaCO3, in granule form, from 33.33% to 26.00%, maintaining excellent results, which are obtained already in the presence of a total content of adhesive based on PE and/or PP, and/or of impact modifiers for PA, based on PE and/or PP which is 10.00% of the industrial waste used in the blend, or 3.33% of the final blend obtained.

All this is made possible by the fact that the adhesives based on PP or PE, just as the impact modifiers for PA based on PE or PP prove to be efficient aids in the role of the PP homopolymer of high grade. In some cases, if operating within the limits declared herein, it is possible also to avoid prior drying/dehumidification at 80° of the blend in the silos, in which simple mixing can take place.

## Claims

1. A thermoplastic polymer formulation containing polyamides (PA) and/or EVOH and polyolefins, **characterized in that** it also comprises a polypropylene homopolymer with MFI in the range of 15 to 50, preferably 20 to 50, (g/10min, ASTM 1238L), as a compatibilizer between said PA and/or EVOH and polyolefin polymers; wherein the quantity of said PP homopolymer is in the range of 15% to 50% by weight and the formulation further comprises a PP (co)polymer different from the above mentioned PP homopolymer.

2. A formulation according to claim 1, wherein the quantity of said PP homopolymer is in the range of 25% to 45% by weight of the total weight of the formulation.

3. A formulation according to claim 1 or 2, wherein said PA and/or EVOH and polyolefins (PE, PP) derive at least in part from waste materials from the production of multilayer films containing two or more of PE, PA, PP, EVOH, and wherein these materials are present in an amount in the range of 10% to 70%, preferably 25% to 35% by weight of the final formulation weight.

4. A formulation according to any of claim 1 to 3, further comprising a PP filled with inorganic and/or organic fillers, said filled PP being present in a quantity between 15% to 40%, preferably 25% and 35% by weight of the final formulation weight.

5. A formulation according to claim 4, wherein said mineral filler is CaCO₃ and said organic filler is wood.

6. A formulation according to claim 5, containing from 3% to 18% by weight on the total weight of the formulation of wood in particles.

7. A formulation according to any claim 2 to 4, containing from 3% to 18% by weight of the CaCO₃ of the total weight of the formulation.

8. A formulation according to any previous claim, comprising, by weight of the final formulation weight:
a) PA in an amount in the range of 0 to 20% by weight, preferably between 1 and 15%;
b) EVOH in an amount in the range of 0% to 2.0% by weight, preferably between 0.06% and 0.67%;
c) PE in an amount in the range of 0-40% by weight, preferably between 1 % to 35%;
d) PP differing from the PP of points e) and f) in an amount in the range of 0% to 40% by weight, preferably between 1% to 35%;
e) PP homopolymer with MFI in the range of 15 to 50, preferably 20 to 50 (g/10min, ASTM 1238L) in an amount in the range of 25.0% to 45%, preferably 30% to 35%;
f) filled PP (co)polymcr in an amount in the range of 15% to 40%, preferably 30% to 35%;
and wherein when PA is 0% EVOH is present, and when EVOH is 0% PA is present.

9. A formulation according to claim 8, wherein the materials a) - d) derive from production waste of multilayer films.

10. A formulation according to claim 9, comprising:
- one part of materials a)-d), said materials being present in amounts according to claim 8,
- one part of material e)
- one part of material f).

11. A formulation according to any previous claim, wherein said PP homopolymer with MFI in the range of 15 to 50 (g/10min, ASTM 1238L) either shows elastic modulus between 1200 and 1600 N/cm² or has elastic modulus in the range of 1700 to 2300 N/cm², most preferably 2100N/cm².

12. A molded or extruded product, **characterized in that** it is produced at least in part with a thermoplastic formulation according to one of the preceding claims.

13. A molded or extruded product according to claim 12, wherein the product is a chair or other similar furniture element.

14. A molded or extruded product according to claim 12 or 13, wherein said product contains a wood based filler.

15. A molded or extruded product according to claim 14, wherein said product is a door, a side or another part of a piece of furniture.

16. A process for recycling waste materials containing polyolefins, polyamides (PA) and/or EVOH, deriving from the production of multilayer films, **characterized in that** said materials are blended with polypropylene homopolymer having MFI in the range between 15 to 50, preferably 20 to 50 (g/10min, ASTM 1238L) and any other polyolefin polymers to obtain a formulation according to any claim 1 to 11, optionally granulating this formulation.

17. A process according to claim 16, comprising a step of drying and/or dehumidifying said waste materials.

18. Use of a polypropylene homopolymer having MFI in the range of 15 to 50, preferably 20 to 50 {g/10min, ASTM 1238L) as a compatibilizing polymer between two or more polymers selected from PE, PA, PP, EVOH and blends thereof.

## Patentansprüche

1. Thermoplastische Polymerformulierung, enthaltend Polyamide (PA) und/oder EVOH und Polyolefine, **dadurch gekennzeichnet, dass** diese auch ein Polypropylen-Homopolymer mit einem Schmelzflussindex MFI im Bereich von 15 bis 50, vorzugsweise 20 bis 50, (g/10min, ASTM 1238L) als ein Kompatibilisator zwischen dem PA und/oder EVOH und Polyolefin-Polymeren umfasst; wobei die Menge des PP-Homopolymers im Bereich von 15 Gew.-% bis 50 Gew.-% beträgt und die Formulierung zudem ein PP-(Co)polymer umfasst, welches von dem oben genannten PP-Homopolymer verschieden ist.

2. Formulierung gemäß Anspruch 1, wobei die Menge des PP-Homopolymers im Bereich von 25 Gew.-% bis 45 Gew.-% bezogen auf das Gesamtgewicht der Formulierung liegt.

3. Formulierung gemäß Anspruch 1 oder 2, wobei das PA und/oder EVOH und Polyolefine (PE, PP) sich mindestens teilweise von Abfallmaterialien aus der Herstellung von Multischichtfolien, die zwei oder mehr von PE, PA, PP, EVOH enthalten, ableiten und wobei diese Materialien in einer Menge im Bereich von 10 Gew.-% bis 70 Gew.-%, vorzugsweise 25 Gew.-% bis 35 Gew.-%, bezogen auf das Gewicht der Endformulierung zugegen sind.

4. Formulierung gemäß einem der Ansprüche 1 bis 3, zudem umfassend ein PP, welches mit anorganischen und/oder organischen Füllstoffen gefüllt ist, wobei das gefüllte PP in einer Menge von zwischen 15 Gew.-% und 40 Gew.-%, vorzugsweise 25 Gew.-% und 35 Gew.-%, bezogen auf das Endgewicht der Formulierung zugegen ist.

5. Formulierung gemäß Anspruch 4, wobei der mineralische Füllstoff CaCO₃ ist und der organische Füllstoff Holz ist.

6. Formulierung gemäß Anspruch 5, enthaltend teilchenförmiges Holz in einer Menge von 3 Gew.-% bis 18 Gew.-% bezogen auf das Gesamtgewicht der Formulierung.

7. Formulierung gemäß einem der Ansprüche 2 bis 4, enthaltend CaCO₃ in einer Menge von 3 Gew.-% bis 18 Gew.-% bezogen auf das Gesamtgewicht der Formulierung.

8. Formulierung gemäß einem der vorherigen Ansprüche, umfassend bezogen auf das Endgewicht der Formulierung:
a) PA in einer Menge im Bereich von 0 bis 20 Gew.-%, vorzugsweise zwischen 1 Gew.-% und 15 Gew.-%;
b) EVOH in einer Menge im Bereich von 0 Gew.-% bis 2,0 Gew.-%, vorzugsweise zwischen 0,06 Gew.-% und 0,67 Gew.-%;
c) PE in einer Menge im Bereich von 0 bis 40 Gew.-%, vorzugsweise zwischen 1 Gew.-% bis 35 Gew.-%;
d) PP, welches vom PP in den Punkten e) und f) verschieden ist, in einer Menge im Bereich von 0 Gew.-% bis 40 Gew.-%, vorzugsweise zwischen 1 Gew.-% und 35 Gew.-%;
e) PP-Homopolymer mit einem Schmelzflussindex MFI im Bereich von 15 bis 50, vorzugsweise 20 bis 50, (g/10min, ASTM 1238L) in einer Menge im Bereich von 25,0 Gew.-% bis 45 Gew.-%, vorzugsweise 30 Gew.-% bis 35 Gew.-%;
f) gefülltes PP (Co)polymer in einer Menge im Bereich von 15 Gew.-% bis 40 Gew.-%, vorzugsweise 30 Gew.-% bis 35 Gew.-%;
und wobei EVOH anwesend ist, wenn PA bei 0 Gew.-% liegt, und PA anwesend ist, wenn EVOH bei 0 Gew.-% liegt.

9. Formulierung gemäß Anspruch 8, wobei die Materialien a) bis d) sich aus Herstellungsabfall von Multischichtfolien ableiten.

10. Formulierung gemäß Anspruch 9, umfassend:
- einen Teil der Materialien a) bis d), wobei die Materialien in den Mengen gemäß Anspruch 8 vorliegen,
- einen Teil des Materials e)
- einen Teil des Materials f).

11. Formulierung gemäß einem der vorherigen Ansprüche, wobei das PP-Homopolymer mit einem Schmelzflussindex MFI im Bereich von 15 bis 50 (g/10min, ASTM 1238L) entweder ein Elastizitätsmodul zwischen 1200 und 1600 N/cm² zeigt oder ein Elastizitätsmodul im Bereich von 1700 und 2300 N/cm², vorzugsweise 2100 N/cm², zeigt.

12. Geformtes oder extrudiertes Gebrauchsprodukt, **dadurch gekennzeichnet, dass** es zumindest teilweise mit einer thermoplastischen Formulierung gemäß einem der vorherigen Ansprüche hergestellt ist.

13. Geformtes oder extrudiertes Gebrauchsprodukt gemäß Anspruch 12, wobei das Gebrauchsprodukt ein Stuhl oder ein ähnliches Möbelelement ist.

14. Geformtes oder extrudiertes Gebrauchsprodukt gemäß Anspruch 12 oder 13, wobei das Gebrauchsprodukt einen auf Holz basierenden Füllstoff enthält.

15. Geformtes oder extrudiertes Gebrauchsprodukt gemäß Anspruch 14, wobei das Gebrauchsprodukt eine Tür, eine Seite oder ein anderes Teil eines Möbelstücks ist.

16. Verfahren zum Wiederverwenden von Abfallmaterialien, welche Polyolefine, Polyamide (PA) und/oder EVOH enthalten, ableitend von der Herstellung von Multischichtfolien, **dadurch gekennzeichnet, dass** die Materialien mit Polypropylen-Homopolymer mit einem Schmelzflussindex MFI im Bereich von 15 bis 50, vorzugsweise 20 bis 50, (g/10min, ASTM 1238L) und beliebigen anderen Polyolefin-Polymeren gemischt werden, um eine Formulierung gemäß einem der Ansprüche 1 bis 11 zu erhalten, wahlweise Granulieren dieser Formulierung.

17. Verfahren gemäß Anspruch 16, umfassend einen Schritt des Trocknens und/oder des Flüssigkeitsentziehens der Abfallmaterialien.

18. Verwendung eines Polypropylen-Homopolymers mit einem Schmelzflussindex MFI im Bereich von 15 bis 50, vorzugsweise 20 bis 50, (g/10min, ASTM 1238L) als ein Kompatibilisatorpolymer zwischen zwei oder mehr Polymeren, welche aus PE, PA, PP, EVOH und Mischungen davon ausgewählt sind.

## Revendications

1. Formulation de polymères thermoplastiques contenant des polyamides (PA) et/ou un EVOH et des polyoléfines, **caractérisée en ce qu'**elle comprend également un homopolymère de polypropylène présentant un MFI situé dans la plage allant de 15 à 50, de préférence de 20 à 50 (g/10 minutes, ASTM 1238L), jouant le rôle d'agent de compatibilité entre lesdits polymères de PA et/ou d'EVOH et de polyoléfines ; dans laquelle la quantité dudit homopolymère de PP est située dans la plage allant de 15 % à 50 % en poids et la formulation comprend en outre un (co)polymère de PP différent de l'homopolymère de PP susmentionné.

2. Formulation selon la revendication 1, dans laquelle la quantité dudit homopolymère de PP est située dans la plage allant de 25 % à 45 % en poids par rapport au poids total de la formulation.

3. Formulation selon la revendication 1 ou 2, dans laquelle ledit PA et/ou ledit EVOH et lesdites polyoléfines (PE, PP) dérivent au moins en partie de déchets issus de la production de films multicouches contenant deux ou plus de deux parmi un PE, un PA, un PP, un EVOH, et dans laquelle ces matériaux sont présents en une quantité située dans la plage allant de 10 % à 70 %, de préférence de 25 % à 35 % en poids par rapport au poids de la formulation finale.

4. Formulation selon l'une quelconque des revendications 1 à 3, comprenant en outre un PP chargé avec des charges inorganiques et/ou organiques, ledit PP chargé étant présent en une quantité située entre 15 % et 40 %, de préférence entre 25 % et 35 % en poids par rapport au poids de la formulation finale.

5. Formulation selon la revendication 4, dans laquelle ladite charge minérale est CaCO₃ et ladite charge organique est du bois.

6. Formulation selon la revendication 5, contenant 3 % à 18 % en poids, par rapport au poids total de la formulation, de bois sous forme de particules.

7. Formulation selon l'une quelconque des revendications 2 à 4, contenant de 3 % à 18 % en poids de CaCO₃ par rapport au poids total de la formulation.

8. Formulation selon l'une quelconque des revendications précédentes, comprenant, en poids par rapport au poids de la formulation finale :
a) un PA en une quantité située dans la plage allant de 0 % à 20 % en poids, de préférence entre 1 % et 15 % ;
b) un EVOH en une quantité située dans la plage allant de 0 % à 2,0 % en poids, de préférence entre 0,06 % et 0,67 % ;
c) un PE en une quantité située dans la plage allant de 0 % à 40 % en poids, de préférence entre 1 % et 35 % ;
d) un PP différent du PP des points e) et f) en une quantité située dans la plage allant de 0 % à 40 % en poids, de préférence entre 1 % et 35 % ;
e) un homopolymère de PP présentant un MFI situé dans la plage allant de 15 à 50, de préférence de 20 à 50 (g/10 minutes, ASTM 1238L) en une quantité située dans la plage allant de 25,0 % à 45 %, de préférence de 30 % à 35 % ;
f) un (co)polymère de PP chargé en une quantité située dans la plage allant de 15 % à 40 %, de préférence de 30 % à 35 % ;
et dans laquelle, quand le PA est à 0 %, l'EVOH est présent, et quand l'EVOH est à 0 %, le PA est présent.

9. Formulation selon la revendication 8, dans laquelle les matériaux a) à d) dérivent de déchets de production de films multicouches.

10. Formulation selon la revendication 9, comprenant :
- une partie de matériaux a) à d), lesdits matériaux étant présents en des quantités selon la revendication 8,
- une partie de matériau e)
- une partie de matériau f).

11. Formulation selon l'une quelconque des revendications précédentes, dans laquelle ledit homopolymère de PP présentant un MFI situé dans la plage allant de 15 à 50 (g/10 minutes, ASTM 1238L) présente soit un module d'élasticité situé entre 1 200 N/cm² et 1 600 N/cm², soit un module d'élasticité situé dans la plage allant de 1 700 N/cm² à 2 300 N/cm², de manière préférée entre toutes de 2 100 N/cm².

12. Produit moulé ou extrudé, **caractérisé en ce qu'**il est produit au moins en partie avec une formulation thermoplastique selon l'une quelconque des revendications précédentes.

13. Produit moulé ou extrudé selon la revendication 12, dans lequel le produit est une chaise ou un autre élément de mobilier similaire.

14. Produit moulé ou extrudé selon la revendication 12 ou 13, dans lequel ledit produit contient une charge à base de bois.

15. Produit moulé ou extrudé selon la revendication 14, dans lequel ledit produit est une porte, une face de placage ou une autre partie d'une pièce de mobilier.

16. Procédé de recyclage de déchets contenant des polyoléfines, des polyamides (PA) et/ou un EVOH, dérivant de la production de films multicouches, **caractérisé en ce que** lesdits matériaux sont mélangés avec un homopolymère de polypropylène présentant un MFI situé dans la plage allant de 15 à 50, de préférence de 20 à 50 (g/10 minutes, ASTM 1238L) et n'importe quel autre polymère de polyoléfine pour obtenir une formulation selon l'une quelconque des revendications 1 à 11, et facultativement cette formulation est soumise à une granulation.

17. Procédé selon la revendication 16, comprenant une étape de séchage et/ou de déshumidification desdits déchets.

18. Utilisation d'un homopolymère de polypropylène présentant un MFI situé dans la plage allant de 15 à 50, de préférence de 20 à 50 (g/10 minutes, ASTM 1238L) comme polymère de compatibilité entre deux ou plus de deux polymères choisis parmi un PE, un PA, un PP, un EVOH et leurs mélanges.
